# EUROPEAN PATENT SPECIFICATION

(11) **EP 2 210 991 B1**
(45) Date of publication and mention of the grant of the patent: **02.12.2015**
(21) Application number: 09150984.4
(22) Date of filing: 21.01.2009
(51) Int. Cl.: E04B 1/76, B32B 27/40, B32B 27/42, B32B 5/18

(54) **External wall insulation system**
Externes Wandisoliersystem
Système d'isolation murale externe

(43) Date of publication of application: 28.07.2010
(73) Proprietor: Kingspan Insulation B.V., 7102 JH Winterswijk (NL)
(72) Inventor: Van Tol, Martin, 7103 BH Winterswijk (NL); Morssinkhof, Rudolf Wilhelmus Johannes, 7482 AC Haaksbergen (NL); Van 't Ende, Bart, 7511 JP Enschede (NL)
(74) Representative: Lane, Cathal Michael

(56) References cited:
- EP-A- 1 431 473
- DE-U1- 9 211 177
- DE-U1-202007 014 565

## Description

The invention relates to an external wall insulation system for thermally insulating an outside wall of a building, the system comprising:
- an insulating layer attached to an outer surface of said wall;
- a finishing layer attached to an outer surface of said insulating layer.

Such systems are known from practice. A known system for instance comprises an insulating layer of for instance polystyrene or mineral wool that can be connected to an outer surface of an outside wall of a building, for example by means of dowels, anchors or adhesive. On an outer surface of the insulating layer a finishing layer is provided which finishing layer for instance comprises different plaster layers possible with reinforcing elements or other suitable finishing layers (e.g. mineral or polymer based plasters). This external wall insulating system can for instance be used to thermally insulate existing buildings or newly built buildings. At the same time the system may prevent moisture or outer external influences from reaching the wall. A drawback of such known systems is however that the insulating layer has to be relatively thick to provide a sufficient degree of insulation, which might not be expedient around openings in the wall such as around windows and door. Furthermore, the large thickness of the external wall insulation system may result in a decreased available lot surface around the wall.

Therefore, the object of the invention is to provide an improved external wall insulation system. More in particular, the object of the invention is to provide an external wall insulation system having a relatively small thickness that at the same time has a relatively high insulation efficiency.

To that end, an external wall insulation system for thermally insulating an outside wall of a building according to claim 1 is provided.

Such an external wall insulation layer with a composite insulating layer provides a high level insulation and at the same time an efficient foundation for application of the finishing layer. Thus, the total thickness of the system is much smaller than the thickness of the known external wall insulation systems. Consequently, the thickness of the insulation around openings in the wall such as windows and doors is much smaller than in the prior art systems. Thus, the occupied space of the building surrounding lot is smaller leaving a larger usable area. Furthermore, due to the reduced thickness the amount of light entering the building may be larger resulting in a lighter building inner space. Also the appearance of the building may be much nicer without the relatively thick external wall insulation system layer. The high efficient insulation layer provides efficient insulation with a limited thickness. The insulation properties of the insulating layer may be mainly determined by the high efficient insulation layer and for a minor part by the base layer. The base layer is adapted to cooperate with the finishing layer to provide an efficient application basis for said finishing layer. Therefore, the base layer may comprise a suitable surface structure facing the finishing layer such as an open cell surface structure or another irregular or rough surface structure such that at least part of the material of the finishing layer may be received in openings or indentations provided in the surface structure resulting in a desired connection of the finishing layer onto the base layer. The respective layers of the external wall insulation system according to the invention preferably are connected to each other such that the respective layers stay in a connected position, i.e. the desired connection, when a tensile strain of approximately 80kPa is applied to said external wall insulation system. This means that each respective connection between two neighbouring layers preferably has to withstand a tensile strain of approximately 80kPa to comply with a desired performance of the external wall insulation system.

It is noted that EP 1,431,473 discloses an insulating panel for thermally insulating a building façade and a method to insulate a building using such panels. The panel may be constructed in two layers. The thick inner layer is made of high-heat insulating polyurethane foam and the thin outer layer is made of polystyrene. The outer layer serves as a base for a finishing plaster layer.

EP 1,431,473 discloses in particular the following features of claim 1: an external wall insulation system suitable for thermally insulating an outside wall of a building, wherein said system comprises an insulating layer, comprising insulating panels, attached to an outer surface of said wall, and a finishing layer attached to an outer surface of said insulating layer, wherein the insulating layer is a composite layer, said composite layer comprising a high efficient insulation layer, not comprising vacuum panels, facing the wall, which high efficient insulation layer comprises a polyurethane foam layer, and is adapted to provide efficient insulation properties to the wall, wherein said composite layer further comprises a base layer of polystyrene foam facing the finishing layer, which base layer is adapted to cooperate with the finishing layer so as to provide an efficient application basis for the finishing layer.

DE 92,11,177 discloses a sandwich panel for thermal insulation of buildings and a method for insulating a building using said sandwich panels. The sandwich panels are layered having a layer of polyurethane foam with a lower specific weight and a layer with a higher specific weight, said layers being interconnected. The latter layer is provided, on both surfaces thereof, with a glass fibre reinforcement layer. The method may comprise applying a finishing layer to the individual sandwich panels before mounting said panels to the building. The panels may be mounted to the building wall by means of an adhesive or anchors. After mounting the panels to the wall, the slots between two adjacent panels are filled with a polyurethane filler.

DE 20 2007 014565 discloses an external wall insulation system for thermally insulating an outside wall of a building using vacuum panels. The vacuum panels may comprise a supporting body of for instance open-cell polystyrene foam or open-cell polyurethane foam enclosed with a protective foil. On a surface, in use facing away from the wall of the building, the vacuum panels may be provided with a polystyrene layer to provide a base for a plaster layer to be applied. To mount the panels to the wall, specific mounting parts are used to prevent heat loss between the panels.

In order to further limit the total thickness of the external insulating system, the high efficient insulation layer has a thermal heat transfer coefficient of less than or equal to 28 mW/m.K, for instance between 28 mW/m.K - 3 mW/m.K, and comprises a polyurethane (foam) layer, a polyisocyanurate (foam) layer or a phenol layer.

The thermal conductivity of the insulating layer is improved by providing the high efficient insulation layer with a laminate layer, for instance an aluminium film, on both a first surface and a second surface of said high efficient insulation layer. For instance, a high efficient insulation layer comprising polyurethane may comprise a laminate layer of for instance aluminium on both surfaces thereof. Consequently, a substantially gastight layer with said efficient insulation properties is provided.

To achieve the required adherence of the finishing layer onto the composite insolating layer the base layer comprises a layer of polystyrene such as EPS foam, or XPS foam. Such a base layer comprises a surface structure that is adapted to receive the finishing layer material and together form a secure connection. Such a base layer comprises an open cell surface structure. When applying the finishing layer onto a surface of the base layer, the finishing layer may be applied such that a system is provided that prevents moisture and other outside conditions from affecting the insulating layer. Furthermore, in case the outside wall comprises uneven area's the base layer of polystyrene may be levelled easily due to its structure by abrading parts of the surface facing the finishing layer. Furthermore, such a base layer is less firm and more flexible than the high efficient insulation layer which results in a relatively high crack resistance of the finishing layer. A base layer of polystyrene may be connected to the high efficient insulation layer in a desired manner, thus withstanding a tensile strain of approximately 80kPa, due to its material properties. A polystyrene base layer may for instance be advantageously connected to a surface of a gastight high efficient insulation layer comprising laminate layers, for instance of an aluminium film, on both surfaces, which surface faces away from the wall. The polystyrene base layer may also be advantageously connected on other high efficient insulation layers to provide the composite layer of the external wall insulation layer.

Since a high efficient insulation layer of a relatively firm material such as polyurethane may shrink a little due to external influences and the base layer of polystyrene will not, the risk of cracks in the finishing layer due to shrinkage of the high efficient insulation layer is minimised as well. In an alternative embodiment of the invention, the base layer may instead comprise mineral wool.

Preferably, the base layer has a smaller thickness than the high efficient insulation layer. The base layer only needs to have a minimized thickness because the insulating properties of the system are provided by the high efficient insulation layer but at the same time should be thick enough to thoroughly hold the finishing layer.

According to a further aspect of the invention, the high efficient insulation layer may have a thickness of approximately between 50 mm and 200 mm and the base layer may have a thickness of approximately between 3 mm and 50 mm. It is noted that the thickness of the base layer and/or of the high efficient insulation layer may be defined as the distance between two opposing surfaces the respective layer in a direction substantially perpendicular to the outer surface of the external wall of a building.

In further elaboration of the invention, the high efficient insulation layer may comprise a reinforcing structure, preferably spaced apart from and substantially parallel with a surface of the high efficient insulation layer facing the base layer. Such a reinforcing structure may for instance be a meshed tissue of polypropylene and be positioned nearby a laminate layer facing the base layer. The reinforcing structure provides a more even distribution of forces applied to the high efficient insulation layer by the dowels or screws or other attachment means that are used for mounting the composite insulating layer to the outside surface of the wall. The forces are distributed along a relatively large surface area, which prevents tearing and cracking of the finishing layer of the system.

In order to be able to easily apply and install the insulating layer onto the outside surface of a wall, the insulating layer comprises insulating panels, wherein the base layer of an insulating panel is connected to the high efficient insulation layer of said insulating panel. It is advantageous if, according to a further elaboration of the invention, the base layer is connected to the high efficient insulation layer in an offset way such that at least one free end forming edge of the base layer covers a joint between adjacent high efficient insulation layers of adjacent insulating panels. The base layer may be offset over a distance of approximately at most 50 mm with respect to the high efficient insulation layer when the respective base layer and the high efficient insulation layer have similar dimensions. This prevents occurrence of thermal bridges in the external wall insulation system such that the insulation efficiency further increases.

According to another aspect of the system according to the invention, the finishing layer may comprise at least one of an organic or inorganic plaster layer. The finishing layer may for instance comprise at least one or a multitude of a plaster layer, a resin layer or other suitable layers, such as brick slip layers, tile layers, stone slap layers, to cope with weather conditions and prevent the insulating layer from contacting moisture, air and the like such that the quality of the external wall insulation system is maintained. The finishing layer at the same time determines the appearance of the building.

In order to further prevent occurrence of thermal bridges and preventing the finishing layer from cracking due to undesired forces caused by the attachment means of the insulating layer, the base layer comprises removable parts adapted to in use temporarily provide direct access to the high efficient insulation layer. Before mounting the insulating layer onto an outside surface of a wall, the removable parts are removed from the base layer of the insulating panel. Through the openings that become available in the base layer, attachment means can be run through the high efficient insulation layer and the wall. After mounting of the insulating panel, the removable parts may be re-inserted into the spaces such that the parts cover the upper ends, thus the ends facing away from the wall, of the attachment means. The entire outer surface of the base layer provides an efficient adherence basis for the finishing layer with a reduced risk of cracking and tearing of the finishing layer because the forces due to the attachment means are not distributed on the outer surface (i.e. the surface facing away from the wall) of the base layer.

The invention further relates to a wall, for instance an outside wall of a building, comprising an external wall insulation system as described above.

Finally, the invention relates to a method as described in claim 12 for thermally insulating an outside wall of a building. Such a wall and such a method provide similar advantages and effects as described with the external wall insulation system.

Further advantageous embodiments of the external wall insulation system according to the invention are set forth in the dependent claims.

The invention will now be further elucidated by means of, nonlimiting, examples referring to the drawing, in which:
Fig. 1 shows a schematically cross sectional view of a part of an external wall insulation system according to the prior art;
Fig. 2 shows a schematically cross sectional view of a part of an external wall insulation system according to a first embodiment of the invention;
Fig. 3 shows a schematically cross sectional view of a further embodiment of the system according to the invention.

It is noted that similar parts in the different figures are indicated by similar reference numerals.

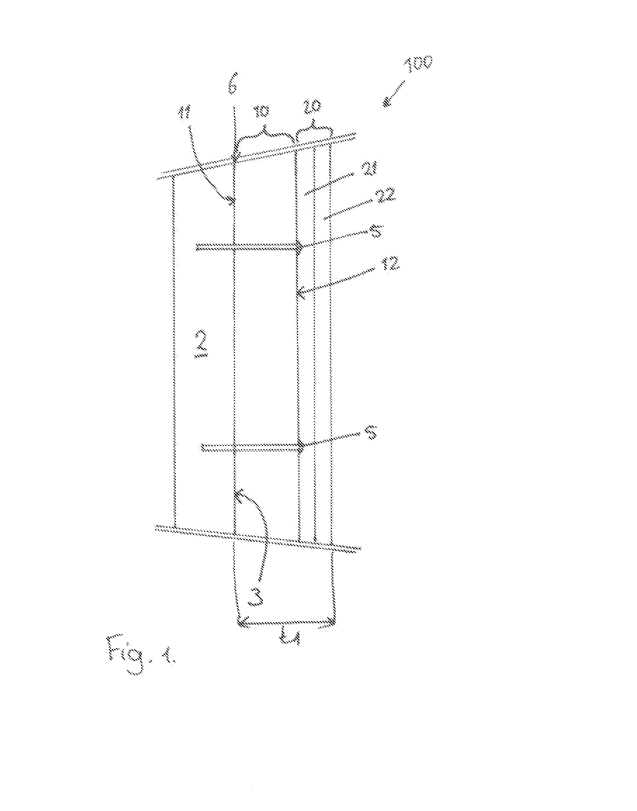

In Figure 1 a prior art external wall insulation system 100 is shown. The system 100 comprises an insulating layer 10 and a finishing layer 20. The insulating layer 10 according to this example is a layer of polystyrene and is attached to an outside surface 3 of the wall 2 of for instance a building. The insulating layer 10 is mounted to the wall 2 by means of wall clamps 5. Also an additional adhesive layer 6 can be provided between the outer surface 3 of the wall 2 and a first surface 11 of the insulating layer 10. In a different embodiment of the prior art system 100, the wall clamps 5 may be omitted. After mounting the insulating layer 10 to the wall 2, the finishing layer 20 is applied to a second surface 12 of the insulating layer 10 facing away from the wall 2. In this example, the finishing layer 20 comprises a first plaster layer 21 and a second finishing plaster layer 22. The finishing layer 20 prevents that weather conditions and environmental influences such as moisture, air, sunlight and the like may reach the insulating layer 10 thereby preventing affecting the insulating layer 10 and its insulating properties. The insulating layer 10 and the finishing layer 20 together have a certain thickness t1 that provides a certain thermal conductivity coefficient in order to effective insulate the wall 2 on an external surface thereof.

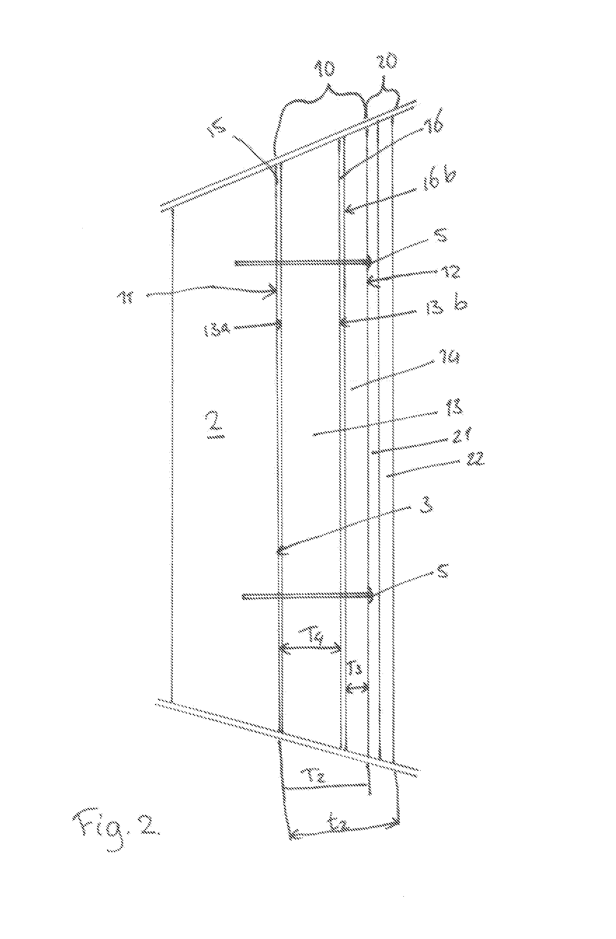

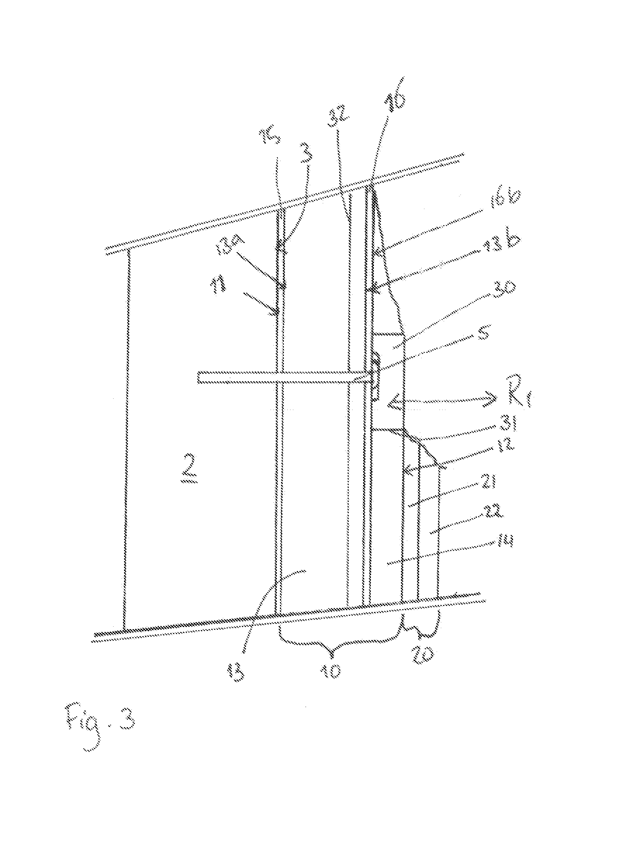

In Figures 2 and 3 two embodiments of an external wall insulation system 1 according to the invention are shown.

The external wall insulation system 1 as shown in Figure 2 comprises an insulating layer 10 and a finishing layer 20. The insulating layer 10 is a composite layer comprising a high efficient insulation layer 13 and a base layer 14. The high efficient insulation layer 13 is adapted to provide efficient insulation with a limited thickness and the base layer 14 is adapted to cooperate with the finishing layer to be applied so as to provide an efficient adherence basis for the finishing layer 20. The insulating properties of the insulating layer 10 are mainly determined by the high efficient insulation layer 13 and for a minor part by the base layer 14.

In this example of the external wall insulation system 1 according to the invention, the high efficient insulation layer 14 comprises a polyurethane foam layer. On first and second surfaces 13a, 13b of the polyurethane layer, laminate layers 15, 16, in this case aluminium film layers, are attached to achieve the gas tightness of the high efficient insulation layer 13. Such a high efficient insulation layer has a thermal heat transfer coefficient of less than or equal to 28 mW/m.K. In this example, the thermal heat transfer coefficient may be approximately 23-24 mW/m.K. On the outer surface 16b of the high efficient insulation layer 13, thus the surface of the aluminium film facing away from the wall 2, the base layer 14 is attached, preferably by means of an adhesive layer 17. In other examples of the external wall insulation system 1 according to the invention, the high efficient insulation layer 13 may have a different composition. The high efficient insulation layer 13 may comprise different materials such as poly-isocyanurate

The base layer 14 is adapted to cooperate with the finishing layer 20 so as to provide an efficient adherence basis for the finishing layer. Preferably, the layer 14 complies with ETAG 2004 Guideline for European Technical Approval of External thermal insulation - Composite systems with rendering. This guideline describes minimum requirements for such a base layer such that the finishing layer 20 can be easily applied and adhered to the outer surface 12 of the insulating layer 10 without risk of detaching, cracking and the like. The base layer 14 may for instance comprise a layer of polystyrene foam such as EPS, XPS or the like. An advantage of such a layer is that in case the outer surface 3 of the wall 2 is uneven and consequently the outer surface 12 of the insulating layer 10 is uneven as well, the outer surface 12 can be levelled in an easy manner by abrasion of part of the material of the base layer 14. This provides an even adherence foundation for the finishing layer 20.

As can be seen in Figure 2, the base layer 14 has a smaller thickness T3 than the thickness T4 of the high efficient insulation layer 13, in this example a substantially gastight layer. The high efficient insulation layer 13 preferably has a thickness of approximately between 50 mm and 200 mm. The base layer 14 preferably has a thickness of approximately between 3mm and 50 mm.

In the shown example, the insulating layer 10 comprises composite insulating panels including part of said high efficient insulation layer 13 and said base layer 14. Such panels can be easily handled and applied to the wall 2.

To apply the external wall insulation system 1 to a wall 2, the insulating layer 10 is composed by bonding of the base layer 14 onto the high efficient insulation layer 10, for instance by means of a polyurethane adhesive and subsequently the layer 10 is attached to an outer surface 3 of a wall 2. The insulating layer 10 is applied such that the high efficient insulation layer 13 faces the wall 2 and the base layer 14 faces away from the wall 2. The insulating layer 10 can be mounted to the wall 2 by means of wall clamps, dowels or screws 5 as can be seen in Figure 2 or any other suitable attachment means, for instance suitable adhesives. After attaching the insulating layer 10 on the wall 2, the finishing layer 20 can be applied onto the outer surface 12 of the insulating layer 10, thus on the outer surface of the base layer 14. The base layer 14 of polystyrene has a surface structure on said outer surface that may be an open cell structure or a substantially rough surface that enables the material of the finishing layer 20 to be well connected to the outer surface of the base layer 14.

A first plaster layer 21 may be spread along the entire outer surface 12 of the insulating layer 10. The first plaster layer 21 may for instance also comprise a reinforcing mesh. Onto the first plaster layer 21 a second plaster layer 22, a brick strip layer, a tile layer or the like may be applied. Plaster layers may for instance comprise mineral or polymer based plasters. The finishing layer 20 covers the insulating layer 10 to protect said insulating layer 10 from outside influences and provides a nice aesthetic appearance of the wall 2. The external wall insulation system 1 according to the invention has a significantly smaller thickness t2 compared to the thickness t1 of the prior art external wall insulation system 100 as shown and described with Figure 1 at an equal thermal performance (U-value).

In Figure 3 a further embodiment of the external wall insulation system 1 according to the invention is shown. The system 1 resembles the system 1 as described with Figure 2. Therefore, only the differences compared to this first embodiment will be described.

The insulation layer 10 comprises a similar high efficient insulation layer 13 and a similar base layer 14 as above described. The base layer 14 is connected to the high efficient insulation layer 13 in an offset way such that a free end forming edge of the base layer 14 covers a joint between adjacent high efficient insulation layers 13 of respective adjacent insulating panels 10 (not shown). It is noted that the joint can be defined as the connecting area between two high efficient insulation layers 13 that are positioned next to each other. The free end forming edge covers the connecting area of the high efficient insulation layer 13 but at the same time forms part of a connecting area of the respective base layers 14 connected to said respective high efficient insulation layers 13. However, both connecting areas do not extend in a similar plane substantially perpendicular to the outer surface 3 of the wall 2, but are offset with respect to each other. The panels may for instance be offset approximately over at most 50 mm. The offset position further prevents occurrence of thermal bridges.

Furthermore, the external wall insulation system 1 according to the third embodiment of the invention as shown in Figure 3 comprises a base layer 14 having removable parts 30 that are adapted to in use temporarily provide direct access to the high efficient insulation layer 13 from the base layer 14 side of the insulating layer 10. Before attaching the insulating layer 10 to the outside surface 3 of the wall 2, the removable parts 30 are removed from the base layer 14 in direction R1. The attachment means, such as screws 5, can directly be run through the high efficient insulation layer 13 and connected to the wall 2. Thus, the screw 5 only extends through the high efficient insulation layer 13 of the insulating layer 10, which high efficient insulation layer 13 may have receiving openings for said attachment means to prevent unwanted piercing of the high efficient insulation layer 13. After mounting the insulating layer 10 to the wall 2, the removable parts 30 can be inserted in the openings 31 located in the base layer 14 enclosing ends of the screw 5 facing away from the wall 2. Preferably, the outer surface of the inserted removable parts is levelled with the outer surface of the base layer 14, such that an even adherence basis for the finishing layer 20 is provided. In another embodiment of the invention, the base layer 14 may only comprise openings 31 that may be filled with any suitable material after inserting the attachment means 5 and mounting the insulating layer 10 onto the wall 2.

The high efficient insulation layer 13 according to the shown example comprises a reinforcing structure 32 that is substantially parallel spaced apart from the outer surface of the high efficient insulation layer 13 facing the base layer 14. Such a reinforcing structure 32 enables the distribution of forces from the screw 5 along a bigger surface of the outer surface 16b of the high efficient insulation layer 13 thereby preventing building up of high local tension in said outer surface 16b and thus minimizing or preventing occurrence of cracks in the finishing layer 20.

In the foregoing specification, the invention has been described with reference to specific examples of embodiments of the invention. It will, however, be evident that various modifications and changes may be made therein without departing from the scope of the invention as set forth in the appended claims.

It is for instance possible that the reinforcing structure 32 is applied in the embodiment of the system 1 according to the invention as shown in Figure 2 or may be omitted in the third embodiment as shown in Figure 3. Furthermore, the high efficient insulation layer 13 may be any suitable layer with or without laminate layers 15, 16. The base layer 14 may be of any suitable material that can provide an efficient adherence basis for the finishing layer 20. The finishing layer 20 may comprises at least one layer of organic or inorganic material, for instance a plaster layer, but may also comprise multiple layers of organic and/or inorganic material. The finishing layer 20 may also or instead comprise other kinds of layers such as a brick slip layer, a tile layer, a stone slap layer and the like. All known finishing layers that can be used to manufacture an external wall insulating system 100 according to the described prior art may be used providing a system 1 with a commonly known appearance but at the same time having a much lower thermal conductivity coefficient with a relatively small thickness of the entire system 1 compared to the prior art system 100.

Furthermore, the base layer 14 may be connected to the high efficient insulation layer 13 in different ways by using different connecting means such as different adhesives. The described external wall insulating system 1 according to the invention may be used to insulate outside walls of a building of different types with different outer surfaces and different dimensions.

However, other modifications, variations and alternatives are also possible. The specifications, drawings and examples are, accordingly, to be regarded in an illustrative rather than in a restrictive sense.

In the claims, any reference signs placed between parentheses shall not be construed as limiting the claim. The word 'comprising' does not exclude the presence of other features or steps then those listed in a claim.

Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to advantage.

## Claims

1. External wall insulation system (1) for thermally insulating an outside wall (2) of a building, the system comprising:
- an insulating layer (10), comprising insulating panels, attached to an outer surface of said wall;
- a finishing layer (20) attached to an outer surface of said insulating layer (10), wherein the insulating layer is a composite layer comprising:
a high efficient insulation layer (13), not comprising vacuum panels, facing the wall, which high efficient insulation layer (13) has a thermal heat transfer coefficient of less than or equal to 28 mW/m.K, and comprises a polyurethane foam layer, a poly-isocyanurate foam layer or a phenol layer, and is adapted to provide efficient insulation properties to the wall, wherein the high efficient insulation layer comprises a laminate layer, e.g. an aluminium film (15, 16), on both a first surface and a second surface of said high efficient insulation layer (13) to achieve gas tightness of the high efficient insulation layer, and
a base layer (14) comprising a layer of polystyrene foam, such as EPS foam or XPS foam, having an open cell surface structure and facing the finishing layer (20), which base layer (14) is adapted to cooperate with the finishing layer (20) so as to provide an efficient application basis for the finishing layer (20), wherein the base layer (14) of an insulating panel is connected to the high efficient insulation layer (13) of said insulating panel.

2. System according to claim 1, wherein the thermal heat transfer coefficient is 23-24mW/m.K.

3. System according to claim 1 or 2, wherein the base layer (14) has a smaller thickness than the high efficient insulation layer (13).

4. System according to any one of claims 1-3, wherein the high efficient insulation layer (13) has a thickness of approximately between 50 mm and 200 mm and wherein the base layer (14) has a thickness of approximately between 3 mm and 50 mm.

5. System according to any one of the preceding claims, wherein the high efficient insulation layer(13) comprises a reinforcing structure (32), preferably spaced apart from and substantially parallel with a surface of the high efficient insulation layer (13) facing the base layer (14).

6. System according to any one of claims 1-5, wherein a surface of the high efficient insulation layer (13) facing the base layer (14) and a surface of the base layer (14) facing the high efficient insulation layer are connected, preferably along substantially an entire connecting surface, for instance by means of an adhesive such as a polyurethane adhesive.

7. System according to claim 6, wherein the base layer (14) of an insulating panel is connected to the high efficient insulation layer (13) of said insulating panel.

8. System according to claim 7, wherein the base layer (14) is connected to the high efficient insulation layer (13) in an offset way such that at least one free end forming edge of the base layer covers a joint between adjacent high efficient insulation layers of respective adjacent insulating panels.

9. System according to any one of the preceding claims, wherein the finishing layer (20) comprises at least one of an organic or inorganic plaster layer.

10. System according to any one of the preceding claims, wherein the base layer (14) comprises removable parts (30) adapted to in use temporarily provide direct access to the high efficient insulation layer.

11. Wall (2), for instance an outside wall of a building, comprising an external wall insulation system (1) according to any one of the preceding claims.

12. Method for thermally insulating an outside wall of a building, wherein the method comprises:
- providing an outside wall (2) of a building;
- attaching an insulating layer (10), comprising insulating panels, to an outer surface of said wall; and
- attaching a finishing layer (20) to an outer surface of said insulating layer, wherein the insulating layer (10) is a composite layer comprising:
a high efficient insulation layer (13), not comprising vacuum panels, attached to the wall (2), which high efficient insulation layer (13) has a thermal heat transfer coefficient of less than or equal to 28 mW/m.K, and comprises a polyurethane foam layer, a poly-isocyanurate foam layer or a phenol layer, and is adapted to provide efficient insulation properties to the wall, wherein the high efficient insulation layer comprises a laminate layer, e.g. an aluminium film (15, 16), on both a first surface and a second surface of said high efficient insulation layer (13) to achieve gas tightness of the high efficient insulation layer, and
a base layer (14) comprising a layer of polystyrene foam, such as EPS foam or XPS foam, having an open cell surface structure and facing the finishing layer, which base layer (14) is adapted to cooperate with the finishing layer so as to provide an efficient application basis for the finishing layer.

13. Method according to claim 12, wherein the base layer (14) and the high efficient insulation layer (13) are interconnected before attaching the insulating layer (10) to the outer surface (3) of said wall (2).

## Patentansprüche

1. Externes Wandisoliersystem (1), um eine Außenwand (2) eines Gebäudes thermisch zu isolieren, wobei das System Folgendes umfasst:
- eine Isolierschicht (10), umfassend Isolierplatten, angebracht an einer Außenfläche der Wand;
- eine Abschlussschicht (20) angebracht auf einer Außenfläche der Isolierschicht (10), wobei die Isolierschicht eine Verbundschicht ist, umfassend:
- eine hocheffiziente, der Wand zugewandte Isolierschicht (13), nicht umfassend Vakuumplatten, wobei die hocheffiziente Isolierschicht (13) einen Wärmeleitfähigkeitskoeffizienten von weniger als oder gleich 28 mW/m.K hat, und eine Polyurethan-Schaumstoffschicht, eine Polyisocyanurat-Schaumstoffschicht oder eine Phenol-Schicht hat, und geeignet ist, effiziente Isoliereigenschaften für die Wand bereitzustellen, wobei die hocheffiziente Isolierschicht eine Laminatschicht, z. B. eine Aluminiumfolie (15, 16), sowohl auf einer ersten Oberfläche als auch auf einer zweiten Oberfläche der hocheffizienten Isolierschicht (13) hat, um eine Gasundichtheit der hocheffizienten Isolierschicht zu erreichen, und
- eine Basisschicht (14), umfassend eine Schicht aus Polystyrol-Schaumstoff, wie EPS-Schaumstoff oder XPS-Schaumstoff, mit einer offenen Zelloberflächenstruktur und der Abschlussschicht (20) zugewandt, wobei die Basisschicht (14) geeignet ist, mit der Abschlussschicht (20) zusammenzuarbeiten, um eine effiziente Anwendungsbasis für die Abschlussschicht (20) bereitzustellen, wobei die Basisschicht (14) einer Isolierplatte mit der hocheffizienten Isolierschicht (13) der Isolierplatte verbunden ist.

2. System nach Anspruch 1, wobei der Wärmedurchlässigkeitskoeffizient 23-24 mW/m.K. ist.

3. System nach Anspruch 1 oder 2, wobei die Basisschicht (14) eine kleinere Dicke hat als die hocheffiziente Isolierschicht (13).

4. System nach einem der Ansprüche 1-3, wobei die hocheffiziente Isolierschicht (13) eine Dicke von ungefähr zwischen 50 mm und 200 mm hat und wobei die Basisschicht (14) eine Dicke von ungefähr zwischen 3 mm und 50 mm hat.

5. System nach einem der vorhergehenden Ansprüche, wobei die hocheffiziente Isolierschicht (13) eine Verstärkungsstruktur (32) umfasst, bevorzugt in einem Abstand von und im Wesentlichen parallel zu einer Oberfläche der hocheffizienten Isolierschicht (13) die der Basisschicht (14) zugewandt ist.

6. System nach einem der Ansprüche 1-5, wobei eine Oberfläche der hocheffizienten Isolierschicht (13), die der Basisschicht (14) zugewandt ist, und eine Oberfläche der Basisschicht (14), die der hocheffizienten Isolierschicht zugewandt ist, bevorzugt entlang im Wesentlichen einer gesamten Verbindungsoberfläche, zum Beispiel mittels eines Klebemittels wie beispielsweise eines Polyurethan-Klebemittels, verbunden sind.

7. System nach Anspruch 6, wobei die Basisschicht (14) einer Isolierplatte mit der hocheffizienten Isolierschicht (13) der Isolierplatte verbunden ist.

8. System nach Anspruch 7, wobei die Basisschicht (14) mit der hocheffizienten Isolierschicht (13) auf versetzte Weise verbunden ist, sodass mindestens ein freies Ende, das die Kante der Basisschicht bildet, eine Fuge zwischen benachbarten hocheffizienten Isolierschichten von jeweils benachbarten Isolierplatten bedeckt.

9. System nach einem der vorhergehenden Ansprüche, wobei die Abschlussschicht (20) mindestens entweder eine organische oder eine anorganische Gipsschicht umfasst.

10. System nach einem der vorhergehenden Ansprüche, wobei die Basisschicht (14) entfernbare Teile (30) umfasst, die geeignet sind, um bei Gebrauch vorübergehend direkten Zugang zu der hocheffizienten Isolierschicht zu geben.

11. Wand (2), zum Beispiel eine Außenwand eines Gebäudes, umfassend ein externes Wandisoliersystem (1) nach einem der vorhergehenden Ansprüche.

12. Verfahren zur thermischen Isolierung eine Außenwand eines Gebäudes, wobei das Verfahren Folgendes umfasst:
- Bereitstellen einer Außenwand (2) eines Gebäudes;
- Anbringen einer Isolierschicht (10), umfassend Isolierplatten, an einer Außenfläche der Wand; und
- Anbringen einer Abschlussschicht (20) an einer Außenfläche der Isolierschicht, wobei die Isolierschicht (10) eine Verbundschicht ist, umfassend:
eine hocheffiziente Isolierschicht (13), nicht umfassend Vakuumplatten, angebracht an der Wand (2), wobei die hocheffiziente Isolierschicht (13) einen Wärmeleitfähigkeitskoeffizienten von weniger als oder gleich 28 mW/m.K hat, und eine Polyurethan-Schaumstoffschicht, eine Polyisocyanurat-Schaumstoffschicht oder eine Phenol-Schicht umfasst und geeignet ist, effiziente Isoliereigenschaften für die Wand bereitzustellen, wobei die hocheffiziente Isolierschicht eine Laminatschicht, z. B. eine Aluminiumfolie (15, 16), sowohl auf einer ersten Oberfläche als auch auf einer zweiten Oberfläche der hocheffizienten Isolierschicht (13) umfasst, um eine Gasundichtheit der hocheffizienten Isolierschicht zu erreichen, und
eine Basisschicht (14), umfassend eine Schicht aus Polystyrol-Schaumstoff wie EPS-Schaumstoff oder XPS-Schaumstoff, mit einer offenen Zelloberflächenstruktur und der Abschlussschicht zugewandt, wobei die Basisschicht (14) geeignet ist, mit der Abschlussschicht zusammenzuarbeiten, um eine effiziente Anwendungsbasis für die Abschlussschicht bereitzustellen.

13. Verfahren nach Anspruch 12, wobei die Basisschicht (14) und die hocheffiziente Isolierschicht (13) miteinander verbunden werden, bevor die Isolierschicht (10) an der Außenfläche (3) der Wand (2) angebracht wird.

## Revendications

1. Système d'isolation externe (1) de mur pour l'isolation thermique d'un mur extérieur (2) d'un bâtiment, le système comportant :
- une couche isolante (10), comprenant des panneaux d'isolation, fixée à une surface extérieure dudit mur ;
- une couche de finition (20) fixée à une surface extérieure de ladite couche isolante (10), la couche isolante étant une couche composite comprenant :
une couche isolante très efficace (13), ne comprenant pas de panneaux sous vide, en regard du mur, laquelle couche d'isolation très efficace (13) a un coefficient de transmission thermique inférieur ou égal à 28 mW/m/k et comprend une couche de polyuréthane expansé, une couche de polyisocyanurate expansé ou une couche de phénol, et est apte à donner au mur des propriétés d'isolation efficaces, la couche isolante très efficace comprenant une couche de stratifié, p.ex. une pellicule d'aluminium (15, 16) sur une première surface ainsi que sur une seconde surface de ladite couche isolante très efficace (13) afin de donner une étanchéité aux gaz à la couche isolante très efficace, et
une couche de base (14) comprenant une couche de polystyrène expansé, tel que de la mousse de PSE ou de la mousse de PSX, ayant une structure superficielle à alvéoles ouvertes et disposée en regard de la couche de finition (20), laquelle couche de base (14) étant apte à coopérer avec la couche de finition (20) de manière à constituer un efficace substrat d'application pour la couche de finition (20), la couche de base (14) d'un panneau d'isolation étant reliée à la couche isolante très efficace (13) dudit panneau d'isolation.

2. Système selon la revendication 1, dans lequel le coefficient de transmission thermique est de 23 à 24 mW/m/k.

3. Système selon la revendication 1 ou 2, dans lequel la couche de base (14) a une épaisseur inférieure à celle de la couche isolante très efficace (13).

4. Système selon l'une quelconque des revendications 1 à 3, dans lequel la couche isolante très efficace (13) a une épaisseur d'approximativement 50 mm à 200 mm et dans lequel la couche de base (14) a une épaisseur d'environ 3 mm à 50 mm.

5. Système selon l'une quelconque des revendications précédentes, dans lequel la couche isolante très efficace (13) comprend une structure de renforcement (32), de préférence espacée et sensiblement parallèle par rapport à une surface de la couche isolante très efficace (13) en regard de la couche de base (14).

6. Système selon l'une quelconque des revendications 1 à 5, dans lequel une surface de la couche isolante très efficace (13) en regard de la couche de base (14) et une surface de la couche de base (14) en regard de la couche isolante très efficace sont reliées, de préférence sur sensiblement toute une surface de liaison, par exemple à l'aide d'une colle telle qu'une colle polyuréthane.

7. Système selon la revendication 6, dans lequel la couche de base (14) d'un panneau d'isolation est reliée à la couche isolante très efficace (13) dudit panneau d'isolation.

8. Système selon la revendication 7, dans lequel la couche de base (14) est reliée d'une manière décalée à la couche isolante très efficace (13) de façon qu'au moins un bord formant extrémité libre de la couche de base couvre une jonction entre des couches isolantes très efficaces de panneaux d'isolation adjacents respectifs.

9. Système selon l'une quelconque des revendications précédentes, dans lequel la couche de finition (20) comprend une couche d'enduit organique et/ou inorganique.

10. Système selon l'une quelconque des revendications précédentes, dans lequel la couche de base (14) comprend des parties amovibles (30) conçues pour servir à assurer temporairement un accès direct à la couche isolante très efficace.

11. Mur (2), par exemple mur extérieur de bâtiment, comportant un système d'isolation externe (1) de mur selon l'une quelconque des revendications précédentes.

12. Procédé pour isoler thermiquement un mur extérieur d'un bâtiment, le procédé comportant :
- la réalisation d'un mur extérieur (2) de bâtiment ;
- la fixation d'une couche isolante (10), comprenant des panneaux d'isolation, sur une surface extérieure dudit mur ; et
- la fixation d'une couche de finition (20) à une surface extérieure de ladite couche d'isolation, la couche d'isolation (10) étant une couche composite comprenant :
une couche isolante très efficace (13), ne comprenant pas de panneaux sous vide, fixée au mur (2), laquelle couche d'isolation très efficace (13) a un coefficient de transmission thermique inférieur ou égal à 28 mW/m/k et comprend une couche de polyuréthane expansé, une couche de polyisocyanurate expansé ou une couche de phénol, et est apte à donner au mur des propriétés d'isolation efficaces, la couche isolante très efficace comprenant une couche de stratifié, p.ex. une pellicule d'aluminium (15, 16) sur une première surface ainsi que sur une seconde surface de ladite couche isolante très efficace (13) afin de donner une étanchéité aux gaz à la couche isolante très efficace, et
une couche de base (14) comprenant une couche de polystyrène expansé, tel que de la mousse de PSE ou de la mousse de PSX, ayant une structure superficielle à alvéoles ouvertes et disposée en regard de la couche de finition, laquelle couche de base (14) étant apte à coopérer avec la couche de finition de manière à constituer un efficace substrat d'application pour la couche de finition.

13. Procédé selon la revendication 12, dans lequel la couche de base (14) et la couche isolante très efficace (13) sont reliées l'une à l'autre avant la fixation de la couche isolante (10) à la surface extérieure (3) dudit mur (2).
